Europäisches Patentamt

(19) European Patent Office

Office européen des brevets

(11) Publication number: **0 137 984**
A2

# EUROPEAN PATENT APPLICATION

(21) Application number: 84110100.9

(22) Date of filing: 24.08.84

(51) Int. Cl.⁴: **F 28 F 11/02, F 16 L 55/12**

(30) Priority: 14.10.83 US 542307

(71) Applicant: LUMMUS CREST S.A.R.L., Tour Franklin Cedex No.11, F-92081 Paris La Defense 8 (FR)

(43) Date of publication of application: 24.04.85 Bulletin 85/17

(72) Inventor: Anthony, Andrew James, 18 West Point Terrace, Tariffville Connecticut 06081 (US)

(84) Designated Contracting States: BE NL SE

(54) Tube repair insert for steam generator.

(57) The present invention is directed to a method and apparatus for securing a repair assembly (30) at a position (16') within a tube (14). The assembly includes a generally cylindrical shell (34) having an outer diameter substantially equal to the tube inner diameter. The shell is outwardly radially expanded in at least one selected location (38) for permanent interference engagement with the tube. A novel aspect of the invention includes positioning a shape memory alloy ring (36) having an outer diameter substantially equal to the shell inner diameter at said location. The alloy has a temperature threshold below the ambient tube operating temperature. The shape memory ring is maintained in the contracted condition during insertion of the ring within the shell. When the alloy ring reaches the threshold temperature, it expands, typically 3–5%, thereby permanently expanding the shell and tube at the assembly location to form a leak tight joint (42) therebetween. The assembly can take the form of a plug or a sleeve.

TUBE REPAIR INSERT FOR STEAM GENERATOR

BACKGROUND OF THE INVENTION

This invention relates to tube repair, and in particular to repair of tubes in a large heat exchanger such as a nuclear steam generator.

In the operation of pressurized water nuclear power reactors, a large heat exchanger, or steam generator, is interposed between the nuclear reactor vessel and the turbine generator set. The hot, primary side water from the nuclear reactor is passed through the tubes of the steam generator for generating steam on the shell or secondary side of the generator.

Each such nuclear steam generator typically contains thousands of tubes, and it is almost inevitable that, occasionally, some tubes will deteriorate and eventually leak radioactive fluid from the primary into the secondary side water. Although a small amount of such leakage is tolerable, measures must be taken during periodic plant outages to repair the leaking tubes.

Such repair work may consist of either plugging the tube to remove it from service, or securing a sleeve in the tube to enable the primary fluid to bypass the deteriorated portion of the tube.

The objective of plugging or sleeving a steam generator tube, however simple in concept, has not been easily accomplished. Although several techniques have been tried, such as brazing or various forms of swaging or mechanical

C820950

interference attachment, the techniques are costly and not altogether satisfactory. Integrity of the joints has been a problem the elevated temperatures and pressures contained within the steam generator, compounded by thermal and stress cycling associated with normal and transient power plant operations. Installation has been difficult because evironmental exposure constraints are imposed on workmen entering the radioactive steam generator. There has not yet been achieved a simple, cost effective and mechanically secure technique for repairing leaking steam generator tubes.

SUMMARY OF THE INVENTION

The present invention is directed to a method and apparatus for securing a repair assembly at a position within a tube. The assembly includes a generally cylindrical shell having an outer diameter substantially equal to the tube inner diameter. The shell is outwardly radially expanded in at least one selected location for permanent interference engagement with the tube. A novel aspect of the invention includes positioning a shape memory alloy ring having an outer diameter substantially equal to the shell inner diameter at said location. The alloy has a temperature threshhold below the ambient tube operating temperature. The shape memory ring is maintained in the contracted condition during insertion of the ring within the shell. When the alloy ring reaches the threshhold temperature, it expands, typically 3-5%, thereby permanently expanding the shell and tube at the assembly location to form a leak tight joint therebetween. The assembly can take the form of a plug or a sleeve.

As will set forth in greater detail below, the use of the present invention permits a rapid and efficient tube repair operation. During a period of two minutes within the plenum of a typical steam generator, a workman could install about 25 to 30 plugs. After five minutes, during which the ring expansion proceeds automatically, a workman could reenter the steam generator and check for proper engagement at a rate of approximately 25 to 30 plugs per minute.

C820950

BRIEF DESCRIPTION OF THE DRAWINGS

A detailed description of the preferred embodiment of the invention is set forth below, with reference to the accompanying drawings in which:

Figure 1 is a partially sectioned elevation view of a nuclear steam generator tube sheet and the repair assembly in position for insertion within a defective tube;

Figure 2 is a sectioned view of the plug embodiment of the repair assembly according to the invention, prior to insertion within the tube;

Figure 3 is a sectioned view of the plug assembly shown in Figure 2, secured in place after the expansion of the shape memory alloy ring;

Figure 4 is a schematic representation of a cold box containing a plurality of repair assemblies with handling stems; and

Figure 5 is a sectioned elevation view of the sleeve embodiment of the inventive repair assembly, secured within a tube after expansion of the alloy ring.

DESCRIPTION OF THE PREFERRED EMBODIMENT

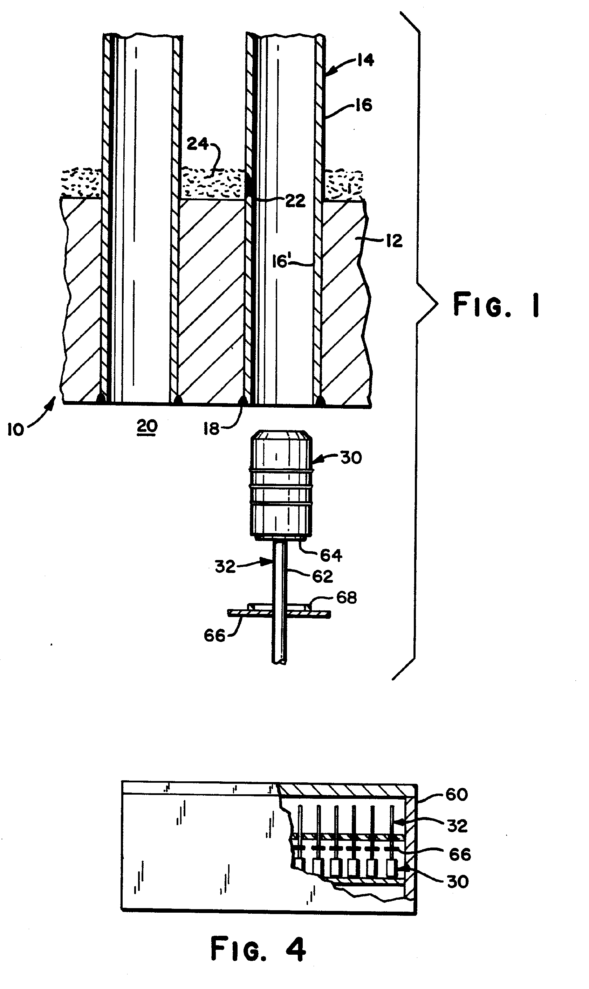

Figure 1 shows a portion of a nuclear steam generator including a tube sheet 12 containing a multiplicity of, typically, Inconel 600 tubes 14 having walls 16 which serve as the fluid boundary between primary coolant from the nuclear reactor (not shown) and the secondary fluid to be converted to steam. The tubes are typically welded 18 to the bottom of the tube sheet 12. Typically, an inlet plenum 20 provides an area large enough for a workman, although somewhat cramped, to manipulate small equipment or appliances for servicing the tubes.

Occasionally, defects 22 form in the tube wall 16, often as a result of the accumulation of crud 24 on the upper side of the tube sheet 12. At the earliest opportunity, repair efforts are undertaken of a type that typically secure a plug or sleeve to the inner wall 16 of tube 14 at for example, location 16'. According to the present invention, a repair assembly 30, shown with a typically friction fit handle means

C820950

32, is installed into the tube 14 by a workman temporarily operating within the inlet plenum 20.

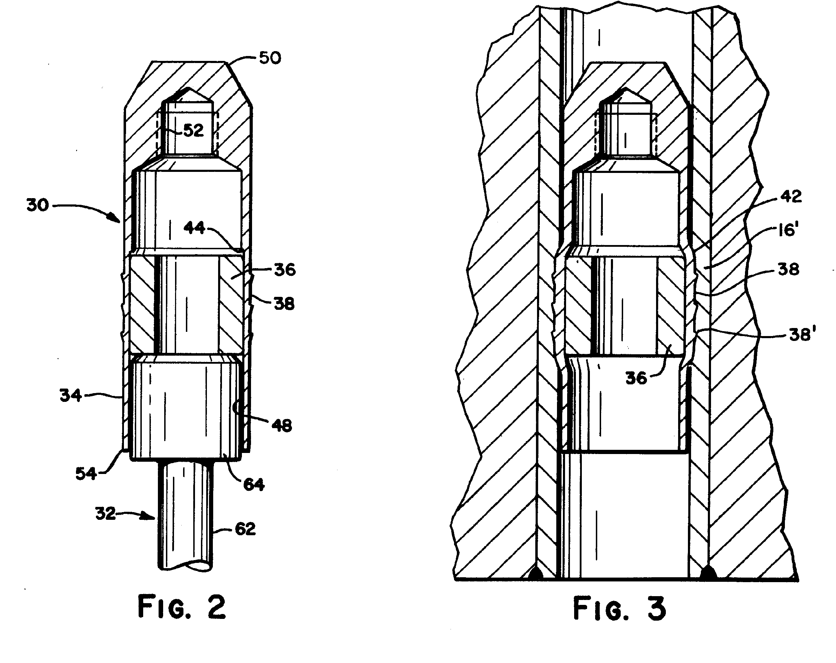

Referring now to Figures 2 and 3, the plug embodiment of the repair assembly is shown, comprising a generally cylindrical shell 34, preferably of the same material as the tube 14, and an expansion ring member 36 within the shell 34, having the desired shape memory properties. The ring member 36 has the unique characteristic of instant radial expansion of, typically, 3 to 5% when its temperature exceeds a predetermined value. For the preferred ring material of Nitinol, consisting of 50% wt. nickel and 50% wt. titanium, the threshhold temperature is in the range of 0-60° F depending upon the application. The ring 36 is located within the shell 34 at the joint region 38 where the interference fit with the tube is desired.

As shown in Figure 3, expansion of the ring 36 produces a concurrent expansion of the shell at the joint region 38, sufficient to also permanently deform the tube wall 16'. Preferably, ridges or other protrusions 38' can be provided on the joint region of the shell to enhance the interference fit and to seal against other surface imperfections. The expansion of the shell in the joint region 38 forms a substantially leak tight joint or seal 42.

In the preferred embodiment, the assembly includes a generally cylindrical substantially hollow, open ended shell 34 having an outer diameter substantially equal to the tube inner diameter, containing a shape memory alloy ring 36 having an outer diameter substantially equal to the shell inner diameter at the desired joint region 38. Preferably, the shell is counterbored to provide a shoulder or stop means 44 against which the ring 36 can be positioned. The closed leading end of the plug 50 is tapered and includes a threaded bore 52 coaxially aligned with the center line of the shell and the annular ring 36. The ring inner diameter is equal to or greater than the diameter of the threaded bore 52.

The shell 34 is preferably long enough to allow for a handle stem 62, particularly stem head 64, to be insertable and secured by friction fit within the shell while abutting the ring 36 when and holding it against shoulder 44.

Referring now to Figures 1,2 and 4, there are shown a plurality of repair assemblies 30 with handles 32 secured therein by friction fit. Each handle stem 62 preferably includes a flange or other stop means 66 such that when the assembly 30 is inserted upward into the steam generator tube 14, the stop means 66 will locate the assembly 30, and in particular the interference fit portion 38, in the desired tube location 16'. In the illustrated embodiment, the tube will be plugged and accordingly the plug assembly 30 may be located below the defect 22. A cylindrical rim 68 or other means may be provided to insure a friction fit between the handle 32 and the tube wall 16 so that the repair assembly will remain in place until the ring 36 expands the shell at joint region 38.

The box 60 containing typically 25 to 30 plugs maintains the plugs below the threshhold transition temperature so that, when the workman is ready to install the assemblies 30, he can open the box and conveniently remove each handle 32 and assembly 30 quickly and efficiently. The assemblies in the box are stored in liquid nitrogen or dry ice (depending upon the transition temperature) to avoid inadvertent expansion and to provide sufficient chilling so that the workman has ample time to insert the plugs in the tubes. It takes about two and one half minutes in air for the full expansion of the joint region 38 to occur after removal of the assembly from the liquid nitrogen.

Although the assemblies 30 and handles 32 are shown attached within the chilled box 60, an alternative is to have only assemblies 30 in the box. The workman carries a plurality of handles and can insert a handle 32 into one assembly 30 then turn the assembly upwardly to insert it into the tube 16, in the orientation shown in Figure 1. Depending on the closeness of the fit between the assembly 30 and the tube ID, friction means such as rim 68 may be desirable carried either on the shell 34, the head 64 or the flange means 66 for friction fitting the assembly against the tube wall to hold it in place before the ring reaches the threshhold expansion temperature. A workman can typically install about 25 to 30 plugs in about two minutes, after which he would exit the steam generator. After approximately five minutes, he would return into the steam generator plenum 20 and pull each handle 32 out of engagement with the plug assembly 30. Removal of the handles, which preferably is designed to require about a 10 pound pull to disengage from the assembly 30, serves as a quality assurance check to be certain the plug assemblies 30 are properly installed. Removal of 25 to 30 handles would take approximately one minute.

Referring again to Figures 1 and 2, it may be appreciated that once the stem 62 and head 64 have been removed from the assembly 30, the expanded of the ring 36 securely engages the plug shell 34 against the tube wall 16 at joint region 38. If in the future the plant operator desires to remove the plug assembly 30 and substitute a sleeve, for example of the type to be described hereinbelow, a threaded shaft (not shown) may be inserted up the tube 14, into the open end 48 of the assembly 30, through the center of the ring 36 and threadly engage the threaded bore 52. By use of hydraulic means well known in the art, the plug could be forced out of the tube. Plug removal would be more difficult with the embodiment of the invention having the serrated edges 38'. To facilitate removal, the lower end of the shell 34 can be chamfered 54.

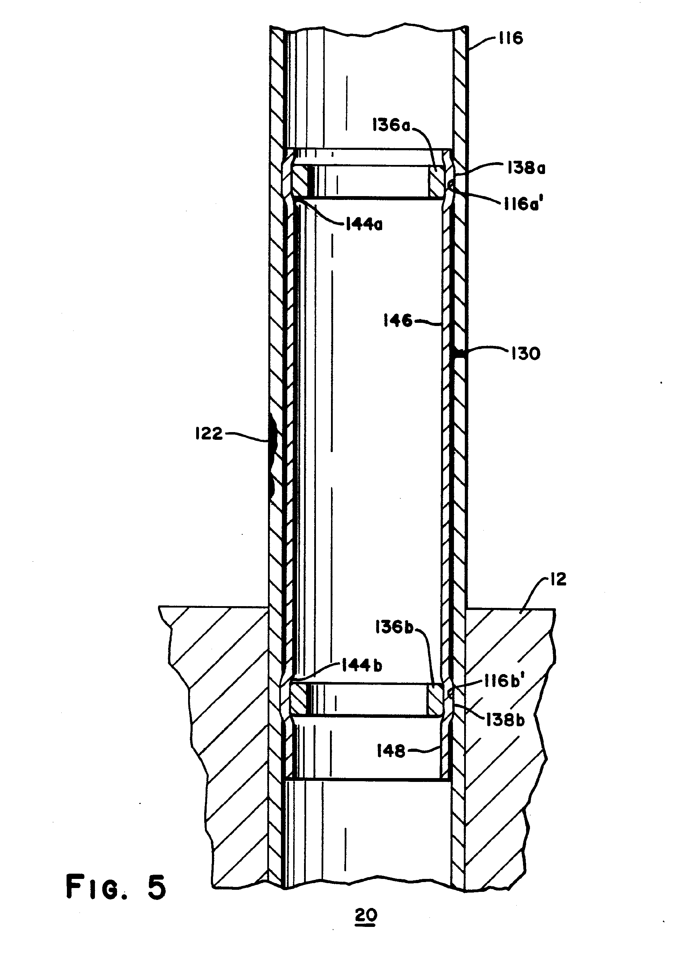

Figure 5 shows a different embodiment of the repair assembly, for use when the tube defect 122 is to be bypassed by means of a generally cylindrical sleeve 130. In Figure 5, the reference characters are related to those used in connection with Figures 1 through 4, in that members having a similar function are identified with the same two digit number prefaced by a "1". For example, ring member 36 of Figure 2 has a corresponding member 136 in Figure 5.

The tube wall 116 has defects 122 immediately above the tube sheet 12. A handle including stem and head can be identical to that described in connection with the plug assembly embodiment (Figure 1-4). Accordingly, the head portion 64 of the handling tool 32 as previously described fits within the lower portion 148 of the sleeve 130 and urges the ring 136b against stop 144b as the sleeve 130 is pushed up into the tube 114. Ring 136a rests against stop 144a above the defect 122. The hollow interior of the sleeve provides a bypass for the primary coolant entering the tube from the plenum 20 and therefore avoids leakage through the defects 122. The sleeve is sealed against the tube wall 116 as described previously, i.e., the rings 136a, 136b expand radially outwardly to permanently deform the sleeve joint region surface 138a, 138b against the respective wall inner surface 116a', 116b', forming a leak tight seal therebetween. If additional structural support is desired, the sleeve ends may be further elongated and crimped against the tube wall by conventional means such as hydraulic expanders.

An important advantage of this sleeve arrangement is that the alloy rings 136a, 136b are not in contact with secondary side water, even if the defect 122 should lead to perforation of the tube wall 116.

In a common nuclear steam generator, the tubes are made of Inconnel 600 having an ID of about .66 inch and a wall thickness of about .04 inch. In the plug or sleeve embodiment, the assembly maximum outside diameter, in the locations adjacent to the expansion ring, would be about .65 inch, including serrations, if any. The assembly is preferably of approximately the same thickness as the tube wall. When Nitinol is employed as the shape memory expansion ring material, a typical ring size would be about .58 OD and about 1/8 inch thick.

It should be appreciated that, although the described embodiment is directed to manual installation, automatic installation using readily adaptable steam generator repair equipment, commonly known as "finger walkers", could also be employed.

C820950

CLAIMS

1. In a method for inserting and securing a repair assembly at a location within a tube, the assembly including a generally cylindrical shell having an outer diameter substantially equal to the tube inner diameter, which shell is outwardly radially expanded in at least one selected region for permanent interference engagement with the tube wall, the improvement comprising the steps of:

positioning a shape-memory alloy ring having an outer diameter substantially equal to the shell inner diameter within the shell at said selected region, said ring having a temperature threshhold of expansion below ambient tube operating conditions;

maintaining the ring below the memory threshhold temperature until the shell is in the desired location within the tube;

allowing the temperature of the ring to rise to ambient;

whereby said ring permanently expands the shell and tube at said selected region to form a leak-tight interference joint therebetween.

2. The method of Claim 1 further including the steps of:

inserting a friction fit temporary handle means into the repair assembly prior to insertion of the assembly within the tube;

grasping the handle means and thereby inserting the repair assembly to the desired location within the tube; and

pulling the handle means apart from the repair assembly after the ring has fully expanded.

3. The method of Claim 2 further including the steps of verifying the formation of the interference joint by monitoring the force required to pull the handle means apart from the repair assembly.

4. A repair assembly to be secured within a metal tube, comprising;

C820950

a generally cylindrical shell at least a portion of which is hollow, said hollow portion having an outer diameter substantially equal to the tube inner diameter;

a generally cylindrical expansion member disposed at a predetermined joint region location within said hollow portion, said member consisting of a shape-memory alloy having a threshhold temperature above which the member linearly expands substantially instaneously;

whereby above said threshhold temperature said member permanently, outwardly radially expands said shell at said joint region location, sufficiently to form an interference, leak tight seal within said tube.

5. The repair assembly of Claim 4 wherein said shape-memory alloy linearly expands at said threshhold temperature, by at least about 5%.

6. The repair assembly of Claim 5 wherein the unexpanded outer diameter of said member is substantially equal to the inner diameter of the shell at said predetermined joint region location.

7. The repair assembly of Claim 6 wherein said shell is a tube plug having a closed front end.

8. The repair assembly of Claim 7 wherein said front end is a substantially solid nose having an internally threaded bore, and wherein said expansion member is a ring coaxially mounted with said threaded bore.

9. The repair assembly of Claim 5 wherein said hollow shell portion includes internal stop means for positioning said expansion ring within said shell.

10. The repair assembly of Claim 9 wherein said shell has serrations on the outer surface at the joint region location.

11. In combination with the repair assembly of Claim 9 handle means adapted to be received by said shell and retained therein by a frictional force large enough to enable an operator to manipulate said assembly while inserting it within the tube, yet small enough to enable an operator to manually extract the handle from the shell after the shell has been secured to the tube.

12. The combination of Claim 11 wherein said handle means carries thereon means for interacting with the tube to retain the handle means stationary while the repair assembly is supported within the tube by the handle means.

13. The repair assembly of Claim 6 wherein said shell is a hollow bypass sleeve having an expansion member near each of its upper and lower ends.

14. The repair assembly of Claim 13 wherein said shell includes means near each of said ends for positioning said respective expansion rings within the shell.

15. In combination with the repair assembly of Claim 14, handle means adapted to be received by said shell and retained therein by a frictional force large enough to enable an operator to manipulate said assembly while inserting it within the tube, yet small enough to enable an operator to manually extract the handle from the shell after the shell has been secured to the tube.

16. The combination of Claim 15 wherein said handle means carries thereon means for interacting with the tube to retain the handle means stationary while the repair assembly is supported within the tube by the handle means.

17. The combination of Claim 15 wherein the shell extends a sufficient distance below the expansion member near the lower end, to receive said handle means in abutting relationship with the adjacent expansion member.

18. A plug assembly secured within an Inconel metal tube, comprising:

a generally cylindrical hollow Inconel shell having a closed upper end, an open lower end, and a joint region intermediate the ends;

a generally cylindrical ring member disposed within the shell in the joint region, said ring member containing an alloy having about 50 wt. per unit nickel and 50 wt. per cent titanium with the physical property of instantly radially expanding between about 3 to 5 per cent when its temperature

C820950

exceeds a predetermined value in the range of between about 60 to 100°F;

said shell joint region being permanently outwardly deformed into interference engagement with the adjacent tube wall to provide a substantially leak-tight seal therebetween, when the ring member is in the expanded condition.

19. A sleeve assembly secured within an Inconel metal tube, comprising;

a generally cylindrical hollow Inconel shell having open upper and lower ends upper and lower shoulder means on the internal surfaces near said ends;

an upper ring member disposed within the shell and abutting the upper shoulder means;

a lower ring member disposed within the shell and abutting the lower shoulder means;

said ring members containing an alloy having about 50 wt. per cent nickel and 50 wt. per cent titanium with the physical property of instantly radially expanding between about 6 to 8 per cent when the temperature exceeds a predetermined value in the range of between about 60° to 100°F; and

whereby the outer surfaces of said shell at the elevations of the rings forming substantially leak tight interference joints with the adjacent tube walls.

C820950

FIG. 1

FIG. 4

FIG. 2

FIG. 3

0137984

0137984

FIG. 5

20